# FASCICULE DE BREVET EUROPEEN

(11) **EP 2 057 061 B1**
(45) Date de publication et mention de la délivrance du brevet: **14.12.2011**
(21) Numéro de dépôt: 07803898.1
(22) Date de dépôt: 19.06.2007
(51) Int. Cl.: B62D 63/02, B62D 21/09, B62D 25/04

(54) **CAISSE DE VEHICULE AUTOMOBILE**
FAHRZEUGAUFBAU
BODY OF AUTOMOTIVE VEHICLE

(30) Priorité: 29.08.2006 FR 0653501
(43) Date de publication de la demande: 13.05.2009
(73) Titulaire: Peugeot Citroën Automobiles SA, 78140 Vélizy-Villacoublay (FR)
(72) Inventeur: BOUCHY, Laurent, 91590 BAULNE (FR)
(86) Numéro de dépôt international: PCT/FR2007/051473
(87) Numéro de publication internationale: WO 2008/025906

(56) Documents cités:
- EP-A- 1 386 767
- EP-A- 1 393 941

## Description

La présence invention concerne une carrosserie allongée d'un véhicule automobile.

La présente invention s'applique plus particulièrement à des véhicules automobiles utilitaires fermés à l'arrière par deux portes. La carrosserie allongée est dérivée d'une carrosserie courte comprenant un pied de volet avec une feuillure de côté d'habitacle dont les dimensions définissent le style du véhicule.

Le brevet EP1393941 divulgue une caisse de véhicule automobile comportant un pied de volet, une gouttière reliant un coté d'habitacle audit pied de volet, ladite gouttière supportant sur un coté extérieur au moins une charnière de porte. Une caractéristique de cette caisse de véhicule est que la gouttière est fixée au pied de volet au moyen d'au moins une pièce de renfort, disposée sur un coté opposé audit coté extérieur de la gouttière. Le brevet EP1386767 se rapporte à un agencement d'un ouvrant comportant deux modes d'ouverture à l'arrière d'un véhicule automobile, du type comportant un cadre porteur sur lequel au moins une porte est montée pivotante entre une position ouverte et une position fermée.

Afin de pouvoir proposer à la clientèle la plus grande diversité de variantes d'un modèle de véhicule automobile donné, on développe un modèle de base et on y ajoute des éléments complémentaires spécifiques pour la variante que l'on souhaite obtenir. Cette façon de procéder est particulièrement d'usage lorsqu'une variante d'un modèle de véhicule automobile ne représente qu'un faible pourcentage de la cadence journalière de fabrication.

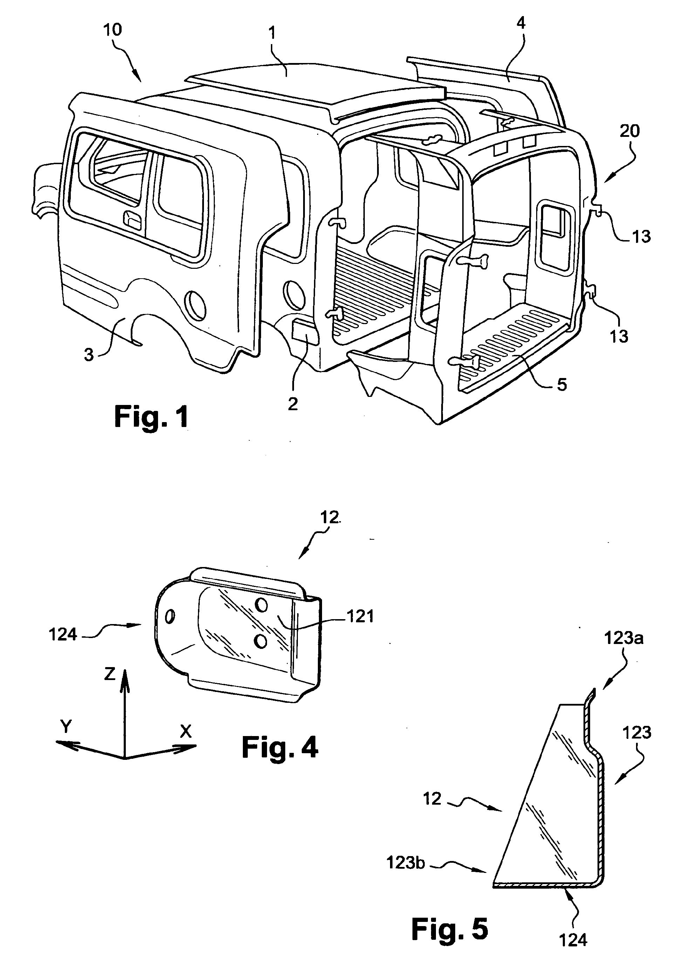

La figure 1 des dessins annexés représente cette conception d'usage à l'exemple d'un véhicule automobile utilitaire de type fourgonnette fermé à l'arrière par deux battants de porte. On voit sur cette vue en perspective très schématique une carrosserie, courte 10 avec un pavillon 1, un anneau arrière de base 2, un côté gauche d'habitacle long 3, et un côté droit d'habitacle long 4. Cette carrosserie 10 est rallongée par un pied de volet long et spécifique 20 ayant son propre anneau arrière 5.

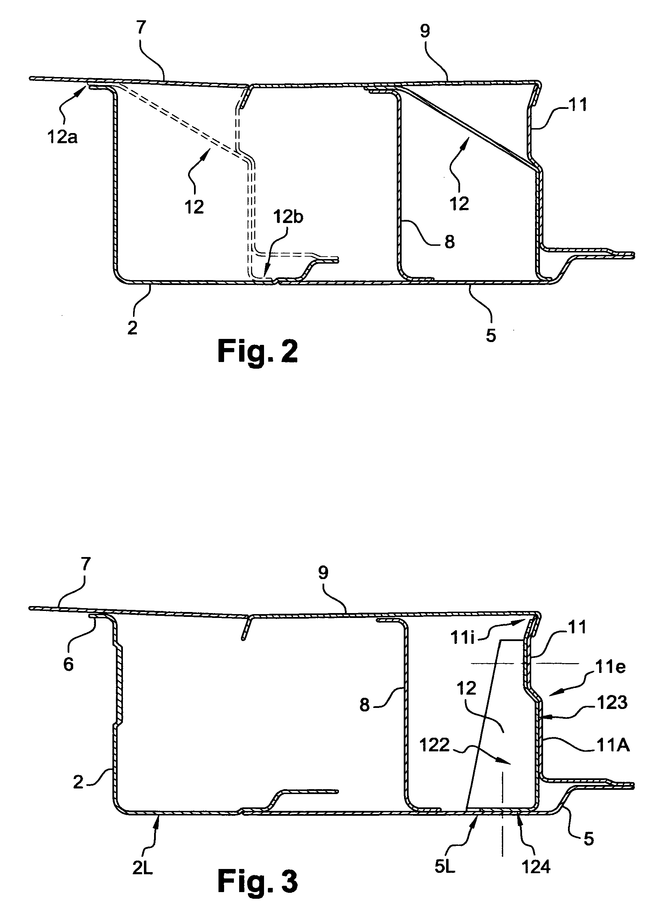

Dans la conception d'usage, l'utilisation du renfort de charnière du véhicule en version courte pour une version longue implique une convergence de style entre ses deux versions, comme cela est illustré en figure 2. Le renfort de charnière 12, qui est agencé entre le côté d'habitacle 9 et l'extension de pied de volet 5 d'une carrosserie longue, est dérivé d'une carrosserie courte selon laquelle le renfort de charnière 12 est agencé entre le côté d'habitacle 7 et le pied de volet 2. La disposition du renfort implique par conséquent un figeage du style de la carrosserie longue quasi à l'identique de celui de la carrosserie courte.

Le but de l'invention est de proposer une conception d'une carrosserie allongée indépendante du style du véhicule en version courte.

Le but de l'invention est atteint avec une carrosserie allongée d'un véhicule automobile utilitaire, la carrosserie allongée étant dérivée d'une carrosserie courte comprenant un pied de volet et un côté d'habitacle.

Conformément à l'invention, la caisse de véhicule automobile comporte un pied de volet, une gouttière reliant un côté d'habitacle audit pied de volet, ladite gouttière supportant sur un côté extérieur au moins une charnière de porte, est fixée au pied de volet au moyen d'au moins une pièce de renfort disposée sur un côté opposé audit côté extérieur de la gouttière.

La caisse allongée de l'invention est donc issue de l'utilisation d'un renfort de charnière et d'une gouttière commune à la carrosserie courte, ainsi que d'une extension de pied de volet et d'un raidisseur d'extension spécifiques, mais qui sont de conception simple et économique.

Le but de l'invention est atteint avec une caisse de véhicule comprenant l'une quelconque des caractéristiques suivantes prises séparément ou en combinaison entre-elles :
- ledit pied de volet d'une carrosserie allongée comprend un second pied de volet disposé au prolongement d'un premier pied de volet, dans le sens longitudinal de la caisse,
- chaque pièce de renfort relie une partie transversale de la gouttière à une partie longitudinale dudit premier pied de volet pour une caisse courte, tandis que pour une caisse allongée, chaque pièce de renfort relie une partie transversale de la gouttière à une partie longitudinale dudit second pied de volet,
- chaque pièce de renfort est disposée sensiblement au droit d'une charnière de porte, ladite charnière étant liée directement à la gouttière et à la pièce de renfort,
- chaque charnière est fixée à la gouttière et à la pièce de renfort au moyen d'au moins une vis s'étendant au travers d'ouvertures ménagées dans la gouttière et la pièce de renfort,
- la pièce de renfort comprend un corps principal présentant des première et seconde zones d'appui, ladite première zone d'appui s'étendant perpendiculaire à ladite seconde zone d'appui et étant disposée contre la gouttière, ladite seconde zone d'appui étant disposée contre la partie longitudinale dudit pied de volet,
- l'élément de renfort comprend au moins une nervure de rigidification reliant entre-elles lesdites première et seconde zones d'appui de la pièce de renfort,
- chaque gouttière, chaque pied de volet et chaque pièce de renfort comprennent respectivement des ouvertures au travers desquelles s'étendent des moyens de maintien permettant de lier de façon démontable chaque pièce de renfort au pied de volet et à la gouttière,

Le but de l'invention est également atteint avec un véhicule automobile ayant une caisse telle que décrite ci avant.

D'autres caractéristiques et avantages de la présente invention ressortiront de la description ci-après d'un mode de réalisation de l'invention. La description est faite en référence aux dessins annexés dans lesquels :
- les figures 1 et 2 représentent le principe d'une caisse allongée de façon traditionnelle,
- la figure 3 représente les dispositions d'une caisse allongée selon l'invention.
- les figures 4 et 5 représentent une pièce de renfort selon l'invention.

Dans la description faite ci-après en référence aux figures, précise des orientations « avant », « arrière », « droite » et « gauche » qui sont données selon le sens de fonctionnement normal d'un véhicule.

La transformation d'une caisse courte de véhicule en une caisse allongée consiste principalement en l'ajout des pièces de carrosserie et de structure, comme cela est schématiquement illustré par la figure 1. C'est la raison pour laquelle on dispose derrière un anneau arrière 2, un anneau arrière 5 reprenant du moins partiellement des pièces de la caisse courte, et comprenant, selon un premier mode de réalisation, des pièces spécifiques dont les détails sont donnés ci-après en référence à la figure 2.

La figure 3 montre les dispositions de l'invention pour une carrosserie allongée dans une vue en coupe horizontale d'une partie droite de la carrosserie, l'avant de la carrosserie étant situé sur la gauche de la figure.

La figure 3 représente la solution conforme à l'invention, en une coupe horizontale d'une partie droite de la caisse, vue dans le sens de la marche avant du véhicule en version longue, une partie gauche de la caisse reprenant par symétrie la disposition des mêmes pièces. Dans cette configuration, le pied de volet 2 est allongé vers l'arrière par une pièce d'extension de pied de volet 5. Le côté d'habitacle 7 est aussi allongé vers l'arrière par une pièce d'extension de côté d'habitacle 9 qui s'étend de manière sensiblement parallèle à l'extension de pied de volet 5. Pour parer la carrosserie contre une tension autour de l'axe longitudinal de la carrosserie, un raidisseur d'extension 8 est monté entre la pièce d'extension 5 et l'extension 9 du côté d'habitacle. La figure 3 montre aussi la position d'une gouttière 11 liant ensemble les extrémités arrière des pièces d'extension 5 et 9, qui définissent respectivement le pied de volet et le côté d'habitacle.

Selon un mode de réalisation préféré de l'invention, la caisse allongée de véhicule comprend une extension de pied de volet 5, une pièce d'extension de côté d'habitacle 9 spécifique qui s'étend de manière sensiblement parallèle à l'extension de pied de volet 2. et un raidisseur d'extension 8 disposé entre ladite pièce d'extension de côté d'habitacle 9 et l'extension de pied de volet 5. Le raidisseur d'extension 8 est en appui, moyennant une feuillure, sur l'extension de côté droit d'habitacle 9 du véhicule automobile, et moyennant une autre feuillure située à une extrémité opposée du raidisseur, sur l'extension de pied de volet 5. On observe donc tout d'abord que l'anneau arrière 5 de la caisse allongée reprend avantageusement la gouttière 11 ainsi que le renfort 12 de charnière utilisé dans la caisse courte, tandis que l'extension de pied de volet 5, le raidisseur d'extension 8 et l'extension de côté d'habitacle 9 sont des pièces de conception spécifique.

Selon une variante de réalisation non représentée, l'anneau arrière 5 de la caisse allongée de véhicule comprend des premier et second pied de volet identiques et reprend à l'identique la gouttière 11, tandis qu'une pièce de liaison interposée longitudinalement entre lesdits premier et second pieds de volet est de conception spécifique.

Conformément à l'invention, et indépendamment de l'un ou l'autre des deux modes de réalisation de l'anneau arrière 5 précédemment décrits, le renfort 12 de charnière est de conception telle qu'il permet son agencement sur la caisse, qu'il s'agisse d'une version courte ou d'une version allongée, avantageusement au droit des charnières haute ou basse de porte battante droite ou gauche.

On observe donc tout d'abord que l'invention reprend une partie des dispositions antérieures représentées sur les figures 1 et 2.

On observe ensuite que le renfort 12 de charnière de l'invention, est disposé généralement en appui contre la gouttière 11 et contre l'extension de pied de volet 5. Pour cela, le renfort 12 comprend une première zone 123 d'appui destinée à coopérer avec la gouttière 11 et une seconde zone 124 d'appui destinée à coopérer avec l'extension de pied de volet 5 en version allongée de la caisse et à coopérer avec le pied de volet 2. Le renfort 12 de l'invention est remarquable en ce que de part son agencement directement en appui contre la gouttière 11 et le pied de volet 2, ou l'extension de pied de volet 5 en version allongée, le style extérieur entre les versions courte et allongée n'est pas figé. En effet, le renfort 12 ne coopère pas directement avec le côté d'habitacle 7 ou son extension 9.

Pour atteindre ce but, le renfort 12 de l'invention comprend un corps 121 destiné à venir en appui directement contre un côté intérieur 11I de la gouttière 11 et contre une partie longitudinale 2L ou 5L appartenant respectivement audit pied de volet 2 ou à son extension 5. Le corps 121 comprend pour cela une première zone 123 qui est partiellement de forme conjuguée à la partie transversale 11A de la gouttière 11 sur laquelle elle est destinée à être agencée directement en appui, tandis qu'une seconde zone 124 s'étend de manière sensiblement perpendiculaire à ladite première zone 123 et qui est destinée à être agencée en appui directement contre le pied de volet 2 ou son extension 5 pour une caisse allongée. Comme illustré sur la vue en coupe horizontale de la figure 5, lesdites première et seconde zones 123 et 124 définissent un L dont les extrémités libres 123A et 123B sont reliées entre-elles par l'intermédiaire d'une nervure de rigidification 122 venue de matière du corps 121.

Le renfort 12 de charnière est de préférence obtenu par au moins une opération d'emboutissage d'une plaque d'acier.

Le renfort 12 est ainsi une pièce rapportée sur la caisse du véhicule, qui est maintenue sur cette dernière au moyen de vis de fixation (non représentées) qui assurent également la fixation de la charnière sur la gouttière 11. Ainsi, lors de l'assemblage de la charnière 13 sur la caisse du véhicule, la gouttière 11 est interposée entre le renfort 12 et la charnière 13 de porte, chaque côté de la gouttière coopérant ainsi avec l'une de ces pièces.

Pour permettre le montage de la charnière 13 sur le côté extérieur 11E de la gouttière et le montage du renfort 12 associé sur la caisse du véhicule, voire notamment sur le côté intérieur 11I de la gouttière, l'une et l'autre de ces pièces comprennent au moins une ouverture au travers de laquelle une vis de fixation est destinée à s'étendre. Il en est de même en ce qui concerne le pied de volet 2 ou son extension 5 qui comprend au moins une ouverture destinée au montage du renfort sur ce dernier.

De manière avantageuse, la dimension minimale de chaque pièce de renfort 12 confère à l'anneau arrière 2 ou à l'extension d'anneau 5, un gain de poids appréciable qui va dans le sens de l'allègement de la caisse.

## Revendications

1. Caisse de véhicule automobile comportant un pied de volet (2, 5), une gouttière (11) reliant un côté d'habitacle (7, 9) audit pied de volet (2, 5), et supportant sur un côté extérieur (11e) au moins une charnière (13) de porte, ladite gouttière (11) étant fixée au pied de volet (2, 5) au moyen d'au moins une pièce de renfort (12) disposée sur un côté (111) opposé audit côté extérieur (11E) de la gouttière (11), **caractérisée en ce que** ledit pied de volet (2, 5) comprend un second pied de volet (5) disposé au prolongement d'un premier pied de volet (2), dans le sens longitudinal de la caisse.

2. Caisse selon la revendication 1, **caractérisée en ce que** chaque élément de renfort (12) relie une partie transversale (11A) de la gouttière (11) à une partie longitudinale (2L) dudit premier pied de volet (2).

3. Caisse selon la revendication 1, **caractérisée en ce que** chaque élément de renfort (12) relie une partie transversale (11A) de la gouttière (11) à une partie longitudinale (5L) dudit second pied de volet (5).

4. Caisse selon l'une quelconque des revendications 1 à 34, **caractérisée en ce que** chaque pièce de renfort (12) est disposée sensiblement au droit d'une charnière de porte, ladite charnière étant montée solidaire de la gouttière (11) et de l'élément de renfort (12)

5. Caisse selon la revendication 4, **caractérisée en ce que** chaque charnière (13) est fixée à la gouttière (11) et à la pièce de renfort (12) au moyen d'au moins une vis s'étendant au travers d'ouvertures ménagées dans la gouttière (11) est la pièce de renfort (12).

6. Caisse selon l'une quelconque des revendications précédentes, **caractérisée en ce que** la pièce de renfort (12) comprend un corps principal (121) présentant des première et seconde zones d'appui (123, 124), ladite première zone d'appui (123) s'étendant perpendiculaire à ladite seconde zone d'appui (124) et étant disposée contre la gouttière (11), ladite seconde zone d'appui (124) étant disposée contre la partie longitudinale (2L, 5L) dudit pied de volet (2, 5).

7. Caisse selon la revendication 6, **caractérisée en ce que** la pièce de renfort comprend au moins une nervure (122) de rigidification reliant entre-elles lesdites première et seconde zones d'appui (123, 124) d'un élément de renfort (12).

8. Caisse selon l'une quelconque des revendications 1 à 7, **caractérisée en ce que** chaque gouttière (11), chaque pied de volet (2, 5) et chaque pièce de renfort (12) comprennent respectivement des ouvertures au travers desquelles s'étendent des moyens de maintien permettant de lier de façon démontable chaque pièce de renfort (12) au pied de volet (2, 5) et à la gouttière (11).

9. Véhicule automobile, **caractérisé en ce qu'**il comprend une caisse selon l'une quelconque des revendications 1 à 8.

## Claims

1. Motor vehicle body comprising a flap base (2, 5), a channel (11) connecting a side of the passenger compartment (7, 9) to said flap base (2, 5) and supporting at least one door hinge (13) on an outer side (11 e), said channel (11) being fixed to the flap base (2, 5) by means of at least one reinforcing piece (12) arranged on a side (11I) opposite said outer side (11E) of the channel (11), **characterised in that** said flap base (2, 5) comprises a second flap base (5) arranged in the extension of a first flap base (2) in the longitudinal direction of the body.

2. Body according to claim 1, **characterised in that** each reinforcing member (12) connects a transverse part (11A) of the channel (11) to a longitudinal part (2L) of said first flap base (2).

3. Body according to claim 1, **characterised in that** each reinforcing member (12) connects a transverse part (11A) of the channel (11) to a longitudinal part (5L) of said second flap base (5).

4. Body according to any one of claims 1 to 3, **characterised in that** each reinforcing piece (12) is arranged substantially at a hinge of the door, said hinge being mounted integrally with the channel (11) and the reinforcing member (12).

5. Body according to claim 4, **characterised in that** each hinge (13) is fixed to the channel (11) and to the reinforcing piece (12) by means of at least one screw extending through openings made in the channel (11) and the reinforcing piece (12).

6. Body according to any one of the preceding claims, **characterised in that** the reinforcing piece (12) comprises a main part (121) having first and second contact regions (123, 124), said first contact region (123) extending perpendicular to said second contact region (124) and being arranged against the channel (11), said second contact region (124) being arranged against the longitudinal part (2L, 5L) of said flap base (2, 5).

7. Body according to claim 6, **characterised in that** the reinforcing piece comprises at least one stiffening rib (122) interconnecting said first and second contact regions (123, 124) of a reinforcing member (12).

8. Body according to any one of claims 1 to 7, **characterised in that** each channel (11), each flap base (2, 5) and each reinforcing piece (12) respectively comprise openings through which holding means extend, which make it possible to connect each reinforcing piece (12) detachably to the flap base (2, 5) and to the channel (11).

9. Motor vehicle, **characterised in that** it comprises a body according to any one of claims 1 to 8.

## Patentansprüche

1. Karosserie für ein Kraftfahrzeug, die eine Klappenbasis (2, 5) aufweist, wobei eine Rinne (11) eine Seite der Fahrgastzelle (7, 9) mit der Klappenbasis (2, 5) verbindet, und auf einer außen liegenden Seite (11e) zumindest ein Türscharnier (13) trägt, wobei die Rinne (11) an der Klappenbasis (2, 5) mittels zumindest einem Verstärkungsteil (12) befestigt ist, das an einer der außen liegenden Seite (11 E) der Rinne (11) gegenüberliegenden Seite (11I) angeordnet ist, **dadurch gekennzeichnet, dass** die Klappenbasis (2, 5) eine zweite Klappenbasis (5) umfasst, die in der Verlängerung einer ersten Klappenbasis (2) in der Längsrichtung der Karosserie angeordnet ist.

2. Karosserie nach Anspruch 1, **dadurch gekennzeichnet, dass** jedes Verstärkungselement (12) einen quergerichteten Teil (11A) der Rinne (11) mit einem längsgerichteten Teil (2L) der ersten Klappenbasis (2) verbindet.

3. Karosserie nach Anspruch 1, **dadurch gekennzeichnet, dass** jedes Verstärkungselement (12) einen quergerichteten Teil (11A) der Rinne (11) mit einem längsgerichteten Teil (5L) der zweiten Klappenbasis (5) verbindet.

4. Karosserie nach einem der Ansprüche 1 bis 3, **dadurch gekennzeichnet, dass** jedes Verstärkungsteil (12) im Wesentlichen im Bereich eines Türscharniers angeordnet ist, wobei das Scharnier mit der Rinne (11) und dem Verstärkungselement (12) fest verbunden gelagert ist.

5. Karosserie nach Anspruch 4, **dadurch gekennzeichnet, dass** jedes Scharnier (13) an der Rinne (11) und an dem Verstärkungsteil (12) mittels zumindest einer Schraube befestigt ist, die sich durch Öffnungen erstreckt, die in der Rinne (11) und dem Verstärkungsteil (12) vorgesehen sind.

6. Karosserie nach einem der vorhergehenden Ansprüche, **dadurch gekennzeichnet, dass** das Verstärkungsteil (12) einen Hauptkörper (121) umfasst, der eine erste und eine zweite Auflagezone (123, 124) aufweist, wobei sich die erste Auflagezone (123) senkrecht zu der zweiten Auflagezone (124) erstreckt und gegen die Rinne (11) angeordnet ist, wobei die zweite Auflagezone (124) gegen den längsgerichteten Teil (2L, 5L) der Klappenbasis (2, 5) angeordnet ist.

7. Karosserie nach Anspruch 6, **dadurch gekennzeichnet, dass** das Verstärkungsteil zumindest eine Versteifungsrippe (122) umfasst, welche die erste Auflagezone und die zweite Auflagezone (123, 124) eines Verstärkungselements (12) miteinander verbindet.

8. Karosserie nach einem der Ansprüche 1 bis 7, **dadurch gekennzeichnet, dass** jede Rinne (11), jede Klappenbasis (2, 5) und jedes Verstärkungsteil (12) jeweils Öffnungen umfassen, durch die sich Haltemittel erstrecken, die es ermöglichen, jedes Verstärkungsteil (12) auf lösbare Weise mit der Klappenbasis (2, 5) und mit der Rinne (11) zu verbinden.

9. Kraftfahrzeug, **dadurch gekennzeichnet, dass** es eine Karosserie nach einem der Ansprüche 1 bis 8 umfasst.
